# EUROPEAN PATENT APPLICATION

(11) **EP 4 749 526 A1**
(43) Date of publication of application: **27.05.2026**
(21) Application number: 24214522.5
(22) Date of filing: 21.11.2024
(51) Int. Cl.: G06N 3/0475, G06N 5/025

(54) **LOGICAL VERIFIABLE MACHINE-LEARNING MODEL**

(71) Applicant: Aleph Alpha GmbH, 69115 Heidelberg (DE)
(72) Inventor: Deiseroth, Björn, 68163 Mannheim (DE)
(74) Representative: Bardehle Pagenberg Partnerschaft mbB Patentanwälte Rechtsanwälte

(57) **Abstract**

Disclosed is a method for training a machine-learning model, a method for generating natural-language based output as well as a corresponding machine-learning model, a data processing apparatus and computer program. The training method may comprise providing at least one training data sample and adjusting a set of parameters of the machine-learning model based on the at least one training data sample. The training data sample may comprise a natural-language based input token, a symbolic annotation of the natural-language based input token, a natural-language based target token and a symbolic annotation of the natural-language based target token, wherein the symbolic annotation is usable for verifying an output of the machine-learning model by means of logic rules.

## Description

### TECHNICAL FIELD

The present disclosure generally relates to the field of machine-learning, and more particularly to techniques for providing a logical verifiable machine-learning model.

### BACKGROUND

Recent advancements in artificial intelligence, particularly in deep learning, have led to the development of large language models (LLMs). These models are designed to process and generate natural-language text by completing word sequences based on vast amounts of data. By training on diverse text datasets, LLMs learn statistical patterns in language, enabling them to perform a range of natural language processing tasks such as text generation, translation, summarization, and question-answering. As a result, LLMs have become invaluable in various fields, including customer service, content creation, and automated assistance. Their ability to generate contextually relevant and coherent responses makes them highly effective in applications where language understanding and generation are crucial.

Despite their impressive capabilities, LLMs face inherent challenges due to their data-driven and probabilistic nature. One critical issue is the occurrence of "hallucinations", wherein a language model generates text that appears plausible or authoritative but is factually inaccurate, logically inconsistent, or unrelated to the prompt.

Hallucinations are especially problematic in contexts where LLM outputs may be relied upon as factual or when incorrect information could lead to harm or misunderstandings. These risks limit the applicability of LLMs in high-stakes or specialized domains where factual integrity is critical. Furthermore, hallucinations may undermine user trust and confidence in AI systems, as users may find it difficult to discern when outputs are factual or fictitious.

Because mitigating this effect entirely appears difficult due to the probabilistic nature of LLMs, efforts have been made to provide techniques for verifying the output of a LLM. However, these techniques remain partial and are often complex to implement at scale as they typically required additional components such as logical verifiers which process the output of the LLM and as such require further computing resources.

It is therefore an objective of the present disclosure to provide a logical verifiable machine-learning model, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

One aspect of the present disclosure relates to a method for training a machine-learning model. The method may be computer-implemented. The method may comprise providing at least one training data sample and adjusting a set of parameters of the machine-learning model based on the at least one training data sample.

The at least one training data sample may comprise a natural-language based input token, a symbolic annotation of the natural-language based input token, a natural-language based target token and a symbolic annotation of the natural-language based target token. The symbolic annotation may be usable for verifying output of the machine-learning model by means of logic rules. This may also be referred to as logical verification.

Throughout the present disclosure, a "hallucination" should be understood as a model generation (i.e., output) that neglects information provided by the model input (e.g., a given context) or that resembles contradictions to the given input.

Throughout the present disclosure, "adjusting model parameters" should be understood as a step in which model parameters (e.g., weights) are adjusted (e.g., by means of backpropagation and use of corresponding loss functions such as cross-entropy loss, label smoothing cross-entropy loss etc.). "Adjusting" may thus also be referred to as training the model or fitting the model to perform a certain task.

Throughout the present disclosure, a "symbolic annotation" should be understood as any combination of natural language annotations (e.g., elements of a text such as words, letters, sentences etc.) and/or symbol annotations (e.g., one or more symbols indicating higher concepts such as grammar etc.). Accordingly, a "symbolic annotation" may comprise a natural language annotation and/or a symbol annotation.

The inventors found that hallucinations often occur because the model outputs an answer to a given input (e.g., prompt, context etc.) which relies only on the trained model state and as such ignores/neglects information provided by the input. In order to detect such an inconsistency, the inventors thus augmented the output generation of known machine-learning models with an additional mathematically proven system which is able to detect inconsistencies and provide corresponding indications to the user. This approach may not detect all inconsistencies due to the statistic nature and complexity of language. However, if it detects an inconsistency, it is irrefutable one. Accordingly, a method for reliably verifying the model output is provided which may additionally output corresponding indications to a user indicating that a hallucination was detected.

For this purpose, additional symbolic annotations to the tokens are provided such that the model is able to derive logic rules based on which the model is able to evaluate and thus verify its generating on symbols found in the corresponding embedding during processing.

Accordingly, the capability of the model is extended by means of a logic verifier module (also referred to as a neuro-symbolic verifier). Thus, a system implementing a model trained according to the training method of this invention no longer requires a subsequent processing of the model output by an additional verifier because the model is able to verify its output on its own.

As a result, processing resources are saved compared to the systems known in the art.

According to another aspect of the present disclosure, the method may further comprise providing, as input to the machine-learning model, the natural-language based input token and the symbolic annotation of the natural-language based input token to obtain a prediction output from the machine-learning model. The prediction output may comprise a natural-language based prediction token and a symbolic annotation of the natural-language based prediction token. The method may comprise determining a first prediction loss based on the target token and the prediction token. The method may comprise determining a second prediction loss based on the symbolic annotation of the target token and the symbolic annotation of the prediction token. The method may comprise adjusting the set of parameters of the machine-learning model based on the first prediction loss and the second prediction loss.

This way, the model is not only trained to generate meaningful output tokens based on the provided input token, but also to generate corresponding symbolic annotations based on which the model output can be verified.

According to another aspect of the present disclosure, the symbolic annotation may indicate one or more symbols of the natural-language based input token based on which the verifying is to be performed.

This way, the model training may be further enhanced as causal symbolic relationships (e.g., grammar) is picked up faster by the model.

According to another aspect of the present disclosure, the verifying may comprise converting the symbolic annotation into one or more logical implications. The logical verifying may comprise determining as a third prediction loss a degree of contradiction freeness of the one or more logical implications. The third prediction loss may be indicative of a consistency score between the target token and the prediction token. In this aspect, adjusting the set of parameters of the machine-learning model may be further based on the third prediction loss.

This way, an additional model output is provided which indicates a consistency score between the target and the predicted token. The score may for example be a probability (e.g., 0-1). Said additional output may thus be used as an indication of a hallucination. In other words., if the consistency score is low (e.g. below 50%), this indicates that the model has produced a hallucination, whereas if the consistency score is high (e.g. above 50% the model) did not produce a hallucination).

According to another aspect of the present disclosure, the one or more logical implication may comprise one or more first order logic (FOL) rules.

This way, the model is configured to not only rely on its trained model states for generating output but also to adapt its generating based on the derived rules and as such facts.

According to another aspect of the present disclosure, the logic rules may define one or more of a causal symbolic relationship for one or more sentences represented by the natural-language based input token, a causal symbolic relationship for one or more sentences represented by the natural-language based input token and the natural-language based target token, a causal symbolic relationship for one or more words represented by the natural-language based input token, a causal symbolic relationship for one or more words or sentences represented by the natural-language based input token and one or more generated target words or sentences and/or a causal symbolic relationship for one or more words represented by the natural-language based input token and the natural-language based target token.

This way, the model is able to pick up rules for both, long-context (e.g., causal symbolic relationships for an entire paragraph sentence) and short-context (e.g., improving attention training for a sentence as word-splits through tokens get bound together through annotations).

According to another aspect of the present disclosure, the logic rules may be defined based on a given context, input and/or output of the machine-learning model.

This way, the model output is adapted to logic rules which take into account all parts of information available (i.e., the provided input comprising prompt(s), given context(s) etc.) as well as the output.

According to another aspect of the present disclosure, the logic rules may comprise one or more dynamically determined rules and/or one or more predetermined rules.

This way, the model training and as such the model generations become steerable. This means that depending on the given use case, the model can be stricter when it comes to verifying. For this purpose, one or more predetermined rules may be provided which define more stricter rules for verifying. Dynamically determined rules may comprise rules derived by the model itself (e.g., during training). Furthermore, both (i.e., dynamically determined and predetermined rules) may be modified (e.g., add a new rule, delete a rule or alter a rule) to steer the model generation without requiring a retraining of the model.

Another aspect of the present disclosure relates to a method for generating a natural-language based output using a machine-learning model. The machine-learning model may be trained according to the training method of any one of the aspects described herein. The method may be particularly useful for fact-based generations or generally in applications in which reliable (i.e., non-hallucinating) model outputs are crucial.

These applications may comprise Database-Querying, Retrieval-Augmented Generation (RAG) or summarizing etc.

The method may comprise providing, as input to the machine-learning model, a natural-language based input and receiving, from the machine-learning model, a natural-language based output generated based on the provided natural-language based input.

The advantages that were mentioned with regards to any one of the previous aspects apply likewise. Further advantages may be applicable.

According to another aspect of the present disclosure, the method may further comprise receiving, from the machine-learning model, a consistency score associated with the natural-language based output.

The advantages that were mentioned with regards to any one of the previous aspects apply likewise. Further advantages may be applicable.

Another aspect of the present disclosure relates to a machine-learning model.

The machine learning model may be trained according to the training method of any one of the aspects described herein.

The machine-learning model may comprise a text embedding module. The text embedding module may be configured to receive a natural-language based input text, generate a natural-language based input token based on the input text and generate a symbolic annotation of the generated input token usable for verifying output of the machine-learning model by means of logic rules.

The machine learning model may comprise an output header module. The output header module may be configured to generate a natural-language based output based on the natural-language based input token. The output header module may be configured to generate a symbolic annotation of the generated natural-language based output. The output header module may be configured to generate a consistency score associated with the natural-language based output based on the symbolic annotation of the generated input token and/or the symbolic annotation of the generated output.

The advantages that were mentioned with regards to any one of the previous aspects apply likewise. Further advantages may be applicable.

Another aspect of the present disclosure relates to a machine-learning model, preferably the above-mentioned machine learning model, which was trained according to the training method of any one of the aspects described herein.

The advantages that were mentioned with regards to any one of the previous aspects apply likewise. Further advantages may be applicable.

According to another aspect of the present disclosure, the symbolic annotation may comprise one or more part of speech (POS) tags.

According to another aspect of the present disclosure, the machine-learning model may comprise a Large Language Model (LLM).

Another aspect of the present disclosure relates to a data-processing apparatus comprising means for performing the method(s) of anyone of the aspects described herein, and/or for executing the machine-learning model of any one of the aspects described herein.

The advantages that were mentioned with regards to any one of the previous aspects apply likewise. Further advantages may be applicable.

Another aspect of the present disclosure relates to a computer program comprising instructions which when executed by a computer cause the computer to perform the method of any one of the aspects described herein, and/or execute the machine-learning model of any one of the aspects described herein.

The advantages that were mentioned with regards to any one of the previous aspects apply likewise. Further advantages may be applicable.

Another aspect of the present disclosure relates to a computer-readable medium comprising a computer program, wherein the computer program comprises instructions which when executed by a computer cause the computer to perform the method of any one of the aspects described herein, and/or execute the machine-learning model of any one of the aspects described herein.

The advantages that were mentioned with regards to any one of the previous aspects apply likewise. Further advantages may be applicable.

### BRIEF DESCRIPTION OF THE DRAWINGS

The disclosure may be better understood by reference to the following drawings:
- Fig. 1:: A flowchart of a method for training a machine-learning model in accordance with embodiments of the present disclosure.
- Fig. 2:: A flowchart of a method for generating a natural-language based output using a machine-learning model in accordance with embodiments of the present disclosure.
- Fig. 3:: A flowchart for verifying an output of a machine-learning model in accordance with embodiments of the present disclosure.
- Fig. 4:: An exemplary machine-learning model in accordance with embodiments of the present disclosure.
- Fig. 5:: A simplified overview of the functionality of a common tokenizer.
- Fig. 6:: A simplified overview of the functionality of a symbolic tokenizer in accordance with embodiments of the present disclosure.
- Fig. 7:: An embedding step in accordance with embodiments of the present disclosure.
- Fig. 8:: Training results of the method for training a machine learning model in accordance with embodiments of the present disclosure.
- Fig. 9:: An example computing device for training a machine learning model and/or generating a natural-language based output using the machine learning model in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

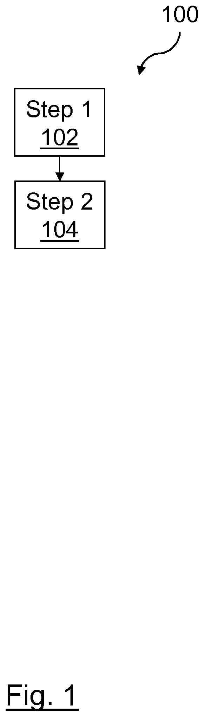

Fig. 1 illustrates a flowchart of a method 100 for training a machine-learning model in accordance with an exemplary embodiment.

The method 100 may comprise providing (step 102) at least one training data sample.

The at least one training data sample may comprise a natural-language based input token, a symbolic annotation of the natural-language based input token, a natural-language based target token and a symbolic annotation of the natural-language based target token. The symbolic annotation may be usable for verifying output of the machine-learning model by means of logic rules.

The method 100 may comprise adjusting (step 104) a set of parameters of the machine-learning model based on the at least one training data sample.

The method 100 may further comprise any aspects as described herein.

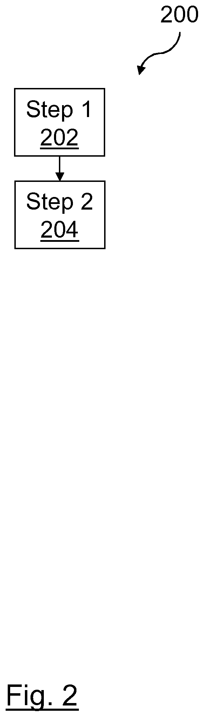

Fig. 2 illustrates a flowchart of a method 200 for generating a natural-language based output using a machine-learning model in accordance with an exemplary embodiment.

The machine-learning model may be trained according to the training method of any one of the aspects described herein (e.g., method 100 of Fig. 1).

The method 200 may comprise providing (step 202), as input to the machine-learning model, a natural-language based input.

The method 200 may comprise receiving (step 204), from the machine-learning model, a natural-language based output generated based on the provided natural-language based input.

The method 200 may further comprise any aspects as described herein.

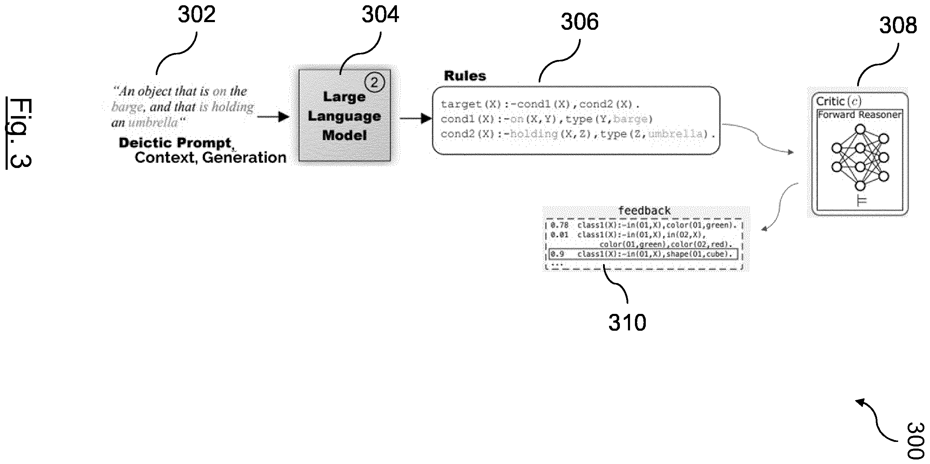

Fig. 3 illustrates a flowchart for verifying 300 an output of a machine-learning model in accordance with an exemplary embodiment. The verifying may be done by means of logic rules.

The machine-learning model 304 (herein illustrated as LLM) may receive a natural-language based input text 302. In the present example, the input text 302 may comprise "*An object that* is on *the barge, and that* is *holding an umbrella".*

The model 304 may generate a natural-language based input token for said text 302 as well as a corresponding symbolic annotation thereof usable for verifying an output of the model 304.

In the present example, the symbolic annotation may indicate several elements (e.g., words) of the generated token based on which the verifying is to be performed. In the present example, the symbolic annotation may indicate the elements "*on*", "*barge*", "is *holding*" and "*umbrella*".

The model may verify a corresponding output by means of logic rules 306. The logic rules 306 may be defined in a formal rule language and as such independent from the language of the input text 302. The logic rules 306 may be represented as logical implications which may comprise one or more FOL rules. For this purpose, the symbolic annotation may be converted into one or more of these logical implications based on which a degree of contradiction freeness may be determined (also referred to as a third prediction loss). Based on the degree of contradiction freeness an indication of a consistency score 310 between the input text 302 and the corresponding output may be determined. In this regard, the model 304 acts as a logical verifier (e.g., a forward reasoner 308) which uses the logic rules 306 to determine the contradiction freeness. The consistency score 310 determined this way may be provided as feedback to the user (e.g., by causing a display of the score 310 on a display of a computing device).

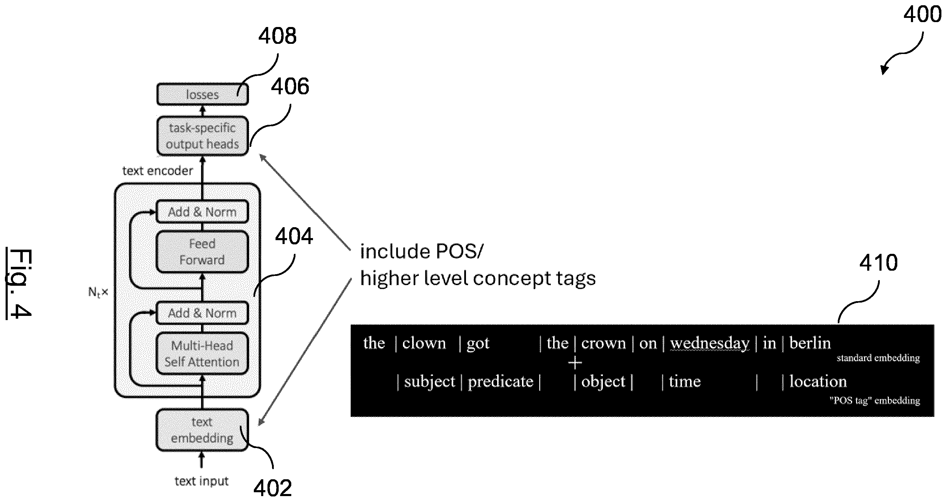

Fig. 4 illustrates an exemplary machine-learning model 400 in accordance with an exemplary embodiment. The machine-learning model 400 may be trained according to the training method of any of the aspects described herein (e.g., method 100 of Fig. 1). As such, the machine-learning model 400 may be configured (e.g., via training) to perform the method for generating natural-language based output according to any of the aspects described herein (e.g., method 200 of Fig. 2).

The machine-learning model 400 may comprise a text embedding module 402, a text encoder module 404 and an output header module 406.

The text embedding module 402 may be configured to receive a natural-language based input text, generate a natural-language based input token based on the input text and generate a symbolic annotation of the generated input token usable for verifying output of the machine-learning model by means of logic rules.

The text encoder module 404 may comprise a plurality of encoder blocks. Each encoder block may comprise a sequence of a multi-head self-attention module, a Residual Connection (Add) and Layer Normalization (Norm) module, a Feed Forward module as well as further Add and Norm module.

The output header module 406 may be a task-specific header module (i.e., fine-tuned for performing a specific task). The output header module 406 may comprise a plurality of task-specific header modules. The output header module 406 may be configured to generate a natural-language based output based on the natural-language based input token and/or to generate a symbolic annotation of the generated natural-language based output. The output header module 406 may further be configured to generate a consistency score associated with the natural-language based output based on the symbolic annotation of the generated input token and/or the symbolic annotation of the generated output.

In particular, during training, the output header module 406 may also output losses 408 based on which the model 400 is trained on. The losses 408 may comprise a first prediction loss, a second prediction loss and/or a third prediction loss as explained above.

In an exemplary embodiment, configuration of these modules to achieve the described behaviour may be achieved by providing corresponding training data samples 410 based on which the model 400 is trained (e.g., by using the method 100 of Fig. 1).

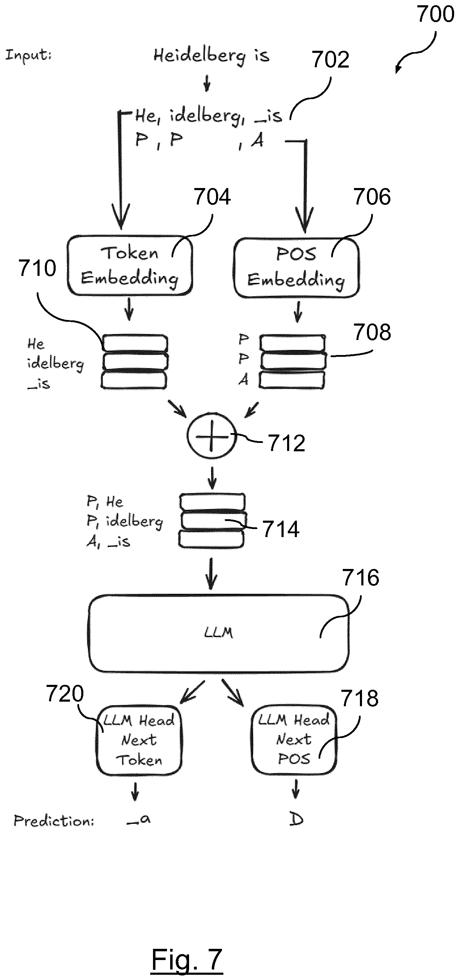

The training data sample 410 may comprise a natural-language based input token generated based on natural-language based input text (i.e., a standard embedding) and a symbolic annotation of the natural-language based input text token (e.g., a POS tag embedding). By including this additional information into the training procedure of the model 400, the model is able (i.e., configured) to verify output by means of logic rules (as explained with respect to Fig. 3). Including this additional information may be done by overloading as explained with respect to Fig. 7.

In the present example, the training data sample 410 comprises a natural-language based input token which comprises [*the*|*clown*| |*the*|*clown*|*on*|*wednesday*|*in*|*berlin*]*.* The corresponding symbolic annotation (here POS tags) may indicate corresponding parts of the speech (i.e., elements and/or symbols of the natural-language based input token) based on which the verifying is to be performed. In the present example, the symbolic annotation comprises [...|*subject*|*predicate*|*...*|*object*|*...*|*time*|...|*location*]*.*

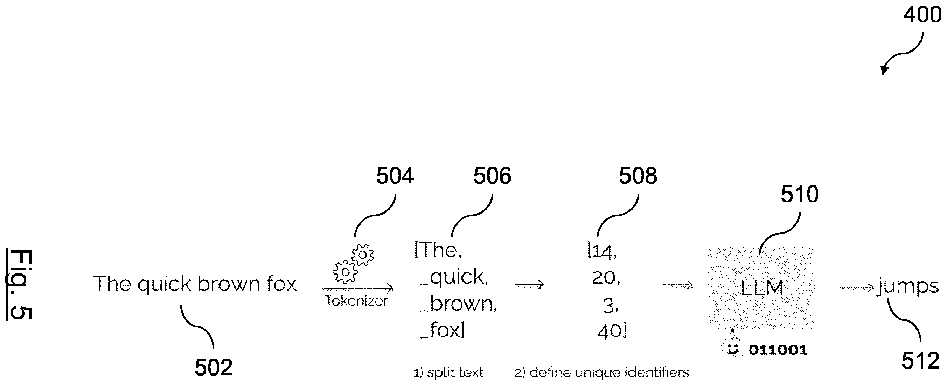

Fig. 5 illustrates a simplified overview of the functionality 500 of a common tokenizer 504 as used in the generation of output 512 by a LLM 510. As shown, the tokenizer 504 receives as input natural language-based input 502 and encodes/tokenizes the input 502. The encoding/tokenizing comprises splitting 506 the input and defining 508 corresponding unique identifiers. In other words, the words of the input text 502 may be mapped to corresponding unique IDs. Whitespaces between words may be encoded as a special character (e.g., "_"). The LLM may then predict based on the encoded input a follow up token (e.g., a unique ID associated with a corresponding word) as output. In the present example, the LLM 510 may thus predict the word "jumps" based on the provided input "The quick brown fox".

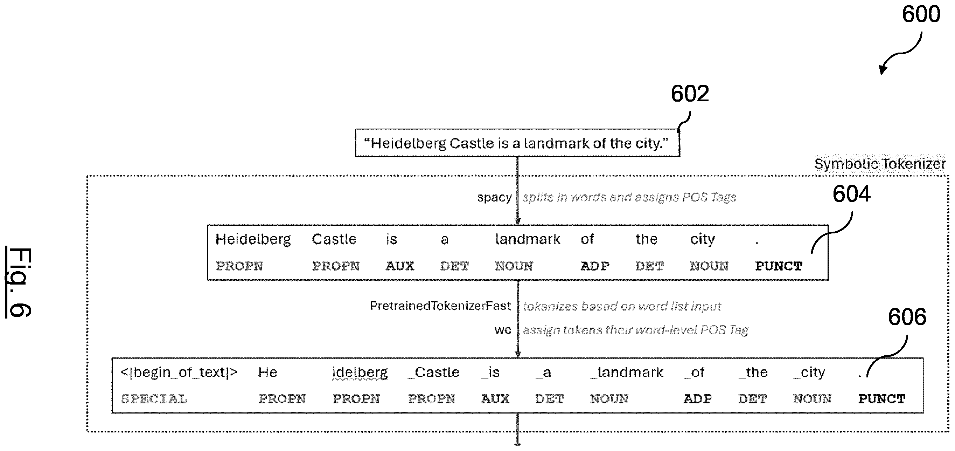

Fig. 6 illustrates a simplified overview of the functionality 600 of a symbolic tokenizer 602 in accordance with embodiments of the present disclosure.

In a first step 604, natural-language based input 602 is first split into words/elements and each word/element is assigned a corresponding symbolic annotation (e.g., a POS tag). For example, the input text "*Heidelberg Caste* is *a landmark of the city"* may be split as illustrated wherein each word/element is assigned with one of the following POS tags: PROPN (proper noun), AUX (auxiliary verb), DET (determinative), NOUN, ADP (adposition) or PUNCT. (punctuation).

The symbolic annotations help the model to pick up language faster. As can be seen, the symbolic annotations can indicate simple grammar rules but also other higher concepts such as time or location as can be seen in the training data sample 410 of Fig. 4.

This is advantageous, because a user typically queries a model with e.g. a search to a specific location. Thus, by providing different symbolic annotations indicating different higher concepts (e.g., time, location, food or any other topic of desire) the model generation can be steered.

For example, a placeholder symbol like "<Food>" may be used instead of actually sampling a "specific food" during the generation. This approach may further be extended with a beam search to generate more complex structures.

In step 606, the split text and the assigned symbolic annotations, are encoded (e.g., using a pretrained tokenizer such as the tokenizer of Fig. 4). Fig. 7 illustrates this embedding step 606 in more detail.

As part of said embedding step 606 the set of tokens is further processed to assign each token its corresponding symbolic annotation (e.g., a word-level POS tag as assigned in step 604). This additional step is necessary because as shown in the example, a word (here "Heidelberg") may be split into multiple tokens. This may happen if words are not properly represented in the training set. In the present example, the word "Heidelberg" was split in two tokens "He" and "idelberg". By assign both with the same symbolic annotations, the causal symbolic relationship between these two parts of the word is indicated.

Fig. 7 illustrates an embedding step 700 in accordance with embodiments of the present disclosure. As explained with respect to step 606 of Fig. 6, the input text is not only split into tokens but also annotated with corresponding symbolic annotations (here POS tags).

Therefore, the input (here "Heidelberg is") is first split and encoded as well as annotated with corresponding symbolic annotations (step 702). A token embedding (step 704) is then performed on the split and encoded words resulting in corresponding tokens 710 of these words. In a separate step (step 706), a POS embedding is performed on the corresponding symbolic annotations resulting in corresponding tokens 708. Both tokens (i.e., the word tokens 710 and the symbolic annotation tokens 708) are then added (e.g., concatenated) to each other resulting in tokens 714. This step is also referred to as overloading the embeddings. The (overloaded) tokens 714 are then provided as input to the LLM which as explained with respect to Fig. 4 comprises different task-specific output heads. In the present example, the LLM may comprise an output head 720 for predicting the next token (e.g. a target token) as well as an output head 718 for predicting the next POS (e.g., a target symbolic annotation). In the given example, the next token may be an "_a" and the corresponding symbolic annotation a "D" (i.e. DET).

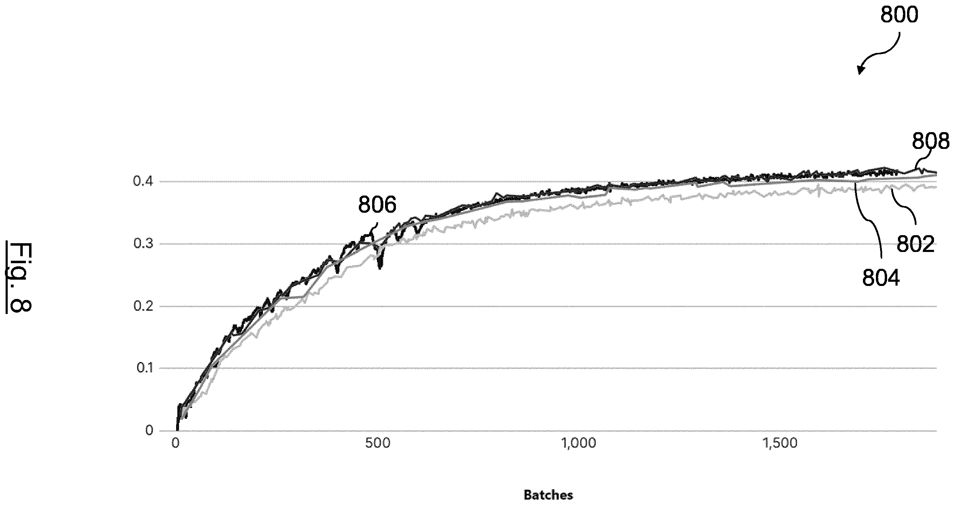

Fig. 8 illustrates training results 800 of the method for training a machine learning model in accordance with embodiments of the present disclosure. The training results 800 illustrate how training of a machine learning model can be improved using the method according to the aspects of the present invention compared to when training the model with common training methods. The illustrated diagram shows the averaged next-predicted token accuracy (Y-axis) with and without symbolic annotations during training over a plurality of training data samples (X-axis). At it can be observed, symbolic annotation results in a speedup to convergence (i.e., getting the correct predictions). Accordingly, the training results 800 prove that the model trains/adjusts faster and generates more reliable results using the additional information provided by means of the symbolic annotation.

Graph 802 of the diagram shows a "plain next-token training" as it is currently standard in the prior art (i.e., training without symbolic annotations).

Graph 804 of the diagram shows a "grammar improved" tokenizer (i.e., training without symbolic annotations) which due to its structure facilitates logical verification of its output. As described in the beginning, the logical verification of the model output may be done by an additional component (e.g. a logical verifier). However, this requires additional computing resources.

Graph 806 of the diagram shows how the training can be improved by using symbolic annotations. As can be seen, the graph 806 indicates a higher averaged next-predicted token accuracy as graphs 802 or 804. Furthermore, the model requires less training data samples for achieving a similar performance as the models underlying the graphs 802 and 804. In the present example, 20 symbolic annotations in the form of POS tags were used. In other words, the embeddings were overloaded with 20 symbolic annotations.

Graph 808 of the diagram also shows how the training can be improved using symbolic annotations. As can be seen, the graph 808 indicates a higher averaged next-predicted token accuracy as graphs 802 or 804. Furthermore, the model requires less training data samples for achieving a similar performance as the models underlying the graphs 802 and 804. It can further be observed that the training can be steered (e.g., regarding stability and speed) by using more symbolic annotations. Compared to the model of graph 806, the present example used 60 symbolic annotations in the form of POS tags. In other words, the embeddings were overloaded with 60 symbolic annotations. This proves that the training of the model can be steered using the annotations as less/more annotations result in different training trajectories.

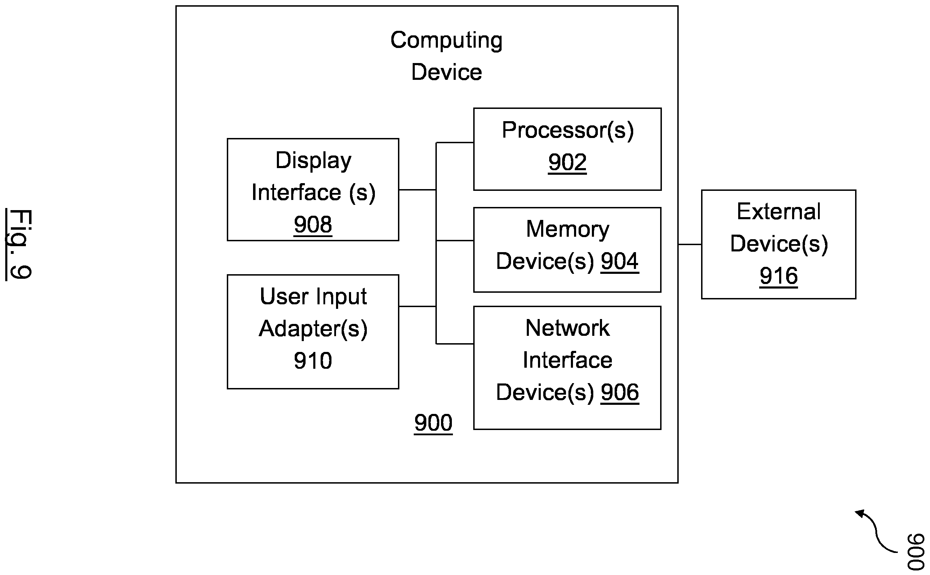

Fig. 9 illustrates block diagram of an example computing device 900 for training a machine learning model and/or generating a natural-language based output using the machine learning model in accordance with an exemplary embodiment. The computing device 900 may also be referred to, for example as an "apparatus", "computing device", "computer system", or "computing system". The computing device 900 may comprise means for performing the method of any one of the aspects described herein (e.g., methods 100, 200, 300). Examples for these means are given in the following.

In some embodiments, the computing device 900 includes one or more of the following: one or more processors 902 (which may be referred to as "hardware processors" or individually as a "hardware processor"); one or more memory devices 904; one or more network interface devices 906; one or more display interfaces 908; and one or more user input adapters 910. Additionally, in some embodiments, the computing device 900 is connected to or includes a display device, input devices, etc. These elements (e.g., the processors 902, memory devices 904, network interface devices 906, display interfaces 908, user input adapters 910) are hardware devices (for example, electronic circuits or combinations of circuits) that are configured to perform various different functions for the computing device 900. In some embodiments, these components of the computing device 900 may be collectively referred to as computing resources e.g., resources that are used to carry out execution of instructions and include the processors (one or more processors 902), storage (one or more memory devices 904), and I/O (network interface devices 906, one or more display interfaces 908, and one or more user input adapters 910).

In some instances, the term processing resources may be used interchangeably with the term computing resources. In some embodiments, multiple instances of computing device 900 may arranged into a distributed computing system. Computing device 900 may be configured to communicate with one or more external devices 916. External devices 916 can be other instances of computing device or may be different (e.g., just storage devices, sensors, etc.). In some examples, computing device 900 includes multiple computing devices 900. As an example, a computing device 900 includes different architectures that may be used in cloud computing environments.

In some embodiments, each or any of the processors 902 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 902 uses an instruction set architecture such as x86 or Advanced RISC Machine (ARM).

In some embodiments, each or any of the memory devices 904 is or includes a random access memory (RAM) (such as a Dynamic RAM (DRAM) or Static RAM (SRAM)), a flash memory (based on, e.g., NAND or NOR technology), a hard disk, a magnetooptical medium, an optical medium, cache memory, a register (e.g., that holds instructions), or other type of device that performs the volatile or non-volatile storage of data and/or instructions (e.g., software that is executed on or by processors 902). Memory devices 904 are examples of non- transitory computer-readable storage media.

In some embodiments, each or any of the network interface devices 906 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), LTE Pro, Fifth Generation New Radio (5G NR) and/or other short-range, mid-range, and/or long-range wireless communications technologies).

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASlC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented method (100) for training a machine-learning model, the method comprising:
providing (102) at least one training data sample comprising:
a natural-language based input token;
a symbolic annotation of the natural-language based input token;
a natural-language based target token; and
a symbolic annotation of the natural-language based target token;
wherein the symbolic annotation is usable for verifying an output of the machine-learning model by means of logic rules;
adjusting (104) a set of parameters of the machine-learning model based on the at least one training data sample.

2. The method of the preceding claim further comprising:
providing, as input to the machine-learning model, the natural-language based input token and the symbolic annotation of the natural-language based input token to obtain a prediction output from the machine-learning model, the prediction output comprising:
a natural-language based prediction token; and
a symbolic annotation of the natural-language based prediction token;
determining a first prediction loss based on the target token and the prediction token;
determining a second prediction loss based on the symbolic annotation of the target token and the symbolic annotation of the prediction token; and
adjusting the set of parameters of the machine-learning model based on the first prediction loss and the second prediction loss.

3. The method of any one of the preceding claims, wherein the symbolic annotation indicates one or more symbols of the natural-language based input token on which the verifying is to be performed.

4. The method of any one of the preceding claims, wherein the verifying comprises:
converting the symbolic annotation into one or more logical implications;
determining as a third prediction loss a degree of contradiction freeness of the one or more logical implications, wherein the third prediction loss is indicative of a consistency score between the target token and the prediction token; and
adjusting the set of parameters of the machine-learning model further based on the third prediction loss.

5. The method of the preceding claim, wherein the one or more logical implications comprise one or more first order logic, FOL, rules.

6. The method of any one of the preceding claims, wherein logic rules define one or more of:
a causal symbolic relationship for one or more sentences represented by the natural-language based input token;
a causal symbolic relationship for one or more sentences represented by the natural-language based input token and the natural-language based target token;
a causal symbolic relationship for one or more words represented by the natural-language based input token;
a causal symbolic relationship for one or more words or sentences represented by the natural-language based input token and one or more generated target words or sentences; or
a causal symbolic relationship for one or more words represented by the natural-language based input token and the natural-language based target token.

7. The method of any one of the preceding claims, wherein the logic rules are defined based on a given context, input to and/or output of the machine-learning model; and
preferably, wherein the logic rules comprise one or more dynamically determined rules and/or one or more predetermined rules.

8. A method (200) for generating a natural-language based output using a machine-learning model trained according to any one of claims 1-7, the method comprising:
providing (202), as input to the machine-learning model, a natural-language based input;
receiving (204), from the machine-learning model, a natural-language based output generated based on the provided natural-language based input.

9. The method of the preceding claim, wherein the machine-learning model is trained according to the method of claim 4, the method further comprising:
receiving, from the machine-learning model, a consistency score associated with the natural-language based output.

10. A machine-learning model comprising:
a text embedding module configured to:
receive a natural-language based input text;
generate a natural-language based input token based on the input text; and
generate a symbolic annotation of the generated input token usable for verifying output of the machine-learning model by means of logic rules; and
an output header module configured to:
generate a natural-language based output based on the natural-language based input token;
generate a symbolic annotation of the generated natural-language based output; and
generate a consistency score associated with the natural-language based output based on the symbolic annotation of the generated input token and/or the symbolic annotation of the generated output.

11. A machine-learning model, preferably the machine-learning model of claim 10, trained according to the method of any one of the claims 1-7.

12. The method of any one of claims 1-9, or the machine learning model of any one of claims 10-11, wherein the symbolic annotation comprises one or more part of speech, POS, tags.

13. The method of any one the claims 1-9 or 12, or the machine learning model of any one of claims 10-12, wherein the machine learning model comprises a Large Language Model, LLM.

14. A data-processing apparatus (900) configured to perform the method (100, 200) of any one of claims 1-9 or 12-13, or for executing the machine-learning model of any one of the claims 10-13.

15. A computer program or a computer-readable medium comprising a computer program, wherein the computer program comprises instructions which when executed by a computer cause the computer to perform the method of any one of claims 1-9 or 12-13, or execute the machine-learning model of any one of the claims 10-13.
